(19) Europäisches Patentamt
European Patent Office
Office européen des brevets

(11) **EP 4 455 172 A1**

(12) **EUROPEAN PATENT APPLICATION**

(43) Date of publication:
**30.10.2024 Bulletin 2024/44**

(21) Application number: **23170051.9**

(22) Date of filing: **26.04.2023**

(51) International Patent Classification (IPC):
**C08F 220/06** (2006.01)    **C08F 2/16** (2006.01)
**C08F 4/40** (2006.01)    **C08F 8/44** (2006.01)

(52) Cooperative Patent Classification (CPC):
(C-Sets available)
**C08F 220/06; C08F 2/16; C08F 4/40; C08F 8/44**

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Organik Kimya Sanayi Ve Tic. A.S.
34075 Istanbul (TR)**

(72) Inventors:
• **Perez Lorenzo, Guillermo
34075 Kemerburgaz/Eyup, Istanbul (TR)**

• **Kontart, Oya
34075 Kemerburgaz/Eyup, Istanbul (TR)**
• **Yildirim, Emine
34075 Kemerburgaz/Eyup, Istanbul (TR)**
• **Asar, Ismail
34075 Kemerburgaz/Eyup, Istanbul (TR)**

(74) Representative: **Müller-Boré & Partner
Patentanwälte PartG mbB
Friedenheimer Brücke 21
80639 München (DE)**

(54) **SURFACTANT FREE DISPERSING AGENT**

(57)    The present invention relates to a process for producing a surfactant free, low molecular weight copolymer in water as polymerization medium at atmospheric pressure and without use of a surfactant, as well as a surfactant free, low molecular weight, copolymeric dispersing agent obtainable by said process, and the use of said dispersing agent.

**EP 4 455 172 A1**

(52) Cooperative Patent Classification (CPC): (Cont.)

C-Sets
**C08F 8/44, C08F 220/06;**
C08F 220/06, C08F 220/1804

**Description**

The present invention relates to a process for producing a surfactant free, low molecular weight copolymer in water as polymerization medium at atmospheric pressure and without use of a surfactant, as well as a surfactant free, low molecular weight, copolymeric dispersing agent obtainable by said process, and the use of said dispersing agent.

In leather tanning and leather wet end applications, there is a high demand for dispersing agents for various steps. Typically, polymeric dispersing agents are employed in the field, such as amphiphilic acrylic copolymers.

Production methods for amphiphilic acrylic copolymers are known from the prior art. However, often such copolymers contain surfactants or are produced in a mixture of solvents. In such cases, it might be necessary to remove the surfactants or parts of the solvents which is connected to increased energy demand and cost.

WO 94/18249 A1 discloses a process for producing an amphiphilic acrylic polymer from acrylic acids and/or acrylates at elevated temperatures using a solvent system of water or water/isopropyl alcohol. The described method includes radical polymerization of acrylic monomers, wherein initiators such as hydroperoxides and hydroammonium salts are used. Such process, however, requires increased energy due to the high temperatures and due to a necessary removal of the isopropyl alcohol, e.g., by evaporating said solvent in vacuum.

WO 95/33780 A1, for instance, discloses a similar process for producing polyacrylic acid without the use of isopropyl alcohol. However, said process also requires high temperatures as well as elevated water vapor pressures which both are connected to high energy demand.

Accordingly, in view of the prior art, an object underlying the present invention is to provide a low cost and energy process for producing a surfactant free, low molecular weight copolymer using only water as polymerization reaction medium, which is easy to employ. Moreover, it is an object of the present invention to provide a surfactant free, low molecular weight, copolymeric dispersing agent obtainable by said process resulting in a low chemical oxygen demand (COD) in the wastewater by carrying fatliquors more efficiently from other organic compounds to the substrate. So, less organic substances will be left in the wastewater. Further, it is an object of the present invention to provide the use of such dispersing agent in leather wet end applications.

The solution to the above technical problems is provided by the embodiments characterized in the claims.

Accordingly, the present invention relates to a process for producing a surfactant free, low molecular weight copolymer, comprising the steps of: polymerizing a composition comprising (i) at least one ethylenically unsaturated monomer having acidic functionality and being present in an amount of 95 - 75 % by weight, based on the total amount of monomers in said composition, and (ii) at least one ethylenically unsaturated monomer having no acidic functionality and being present in an amount of 5 - 25 % by weight, based on the total amount of monomers in said composition, in only water as polymerization reaction medium, in the presence of a redox system of a hydroperoxide and a hydroxylammonium salt as polymerization initiator, at atmospheric pressure, and at a temperature in the range of 80 °C to 100 °C, without use of a surfactant, and subsequently, after polymerization, neutralizing the reaction mixture by means of an alkali, thereby obtaining a surfactant free copolymer with a K value molecular weight in the range of 10 to 100, preferably 20 to 60, more preferably, 25 to 40.

The present inventors have conducted extensive research to provide a solution to the above problems and found that a process for producing a surfactant free, low molecular weight copolymer can be conducted in water as a solvent using a redox system of a hydroperoxide and a hydroxylammonium salt as polymerization initiator. The described process is performed at low temperatures and at atmospheric pressure, and without the use of a surfactant.

In general, the process for producing a surfactant free, low molecular weight copolymer according to the present invention, comprises the following steps of:

polymerizing a composition comprising (i) at least one ethylenically unsaturated monomer having acidic functionality and being present in an amount of 95 - 75 % by weight, based on the total amount of monomers in said composition, and (ii) at least one ethylenically unsaturated monomer having no acidic functionality and being present in an amount of 5 - 25 % by weight, based on the total amount of monomers in said composition, in only water as polymerization reaction medium, in the presence of a redox system of a hydroperoxide and a hydroxylammonium salt as polymerization initiator, at atmospheric pressure, and at a temperature in the range of 80 °C to 100 °C, without use of a surfactant, and

subsequently, after polymerization, neutralizing the reaction mixture by means of an alkali, thereby obtaining a surfactant free copolymer with a K value molecular weight in the range of 10 to 100, preferably 20 to 60, more preferably, 25 to 40.

Hereinafter, the polymerization components and parameters will be described in detail.

Ethylenically unsaturated monomer having acidic functionality

A first component of the polymerization mixture is an ethylenically unsaturated monomer having acidic functionality, hereinafter also called acidic monomer, preferably selected from acrylic acid (AA), itaconic acid (IA), methacrylic acid (MAA), 2-acrylamido-2-methylpropane sulfonic acid (AMPS), and sodium vinylsulfonate (SVS). From these, acrylic acid is most preferred due to its excellent water solubility.

The acidic monomer is comprised in the reaction mixture in 95 to 75 % by weight, preferably 80 to 90 % by weight and more preferably 83 to 90 % by weight, based on the total amount of monomers in said composition. Ensuring said content of the acidic monomer results in improved water solubility of a copolymer which is produced from the polymerization mixture.

Ethylenically unsaturated monomer having no acidic functionality

A second component of the polymerization mixture is an ethylenically unsaturated monomer having no acidic functionality, hereinafter also called neutral monomer, preferably selected from butyl acrylate (BA), methyl methacrylate (MMA), ethyl acrylate (EA), 2-ethylhexyl acrylate (2EHA) or vinyl acetate (VAM). In view of improved amphiphilicity of a resulting copolymer, the neutral monomer is most preferably butyl acrylate (BA).

The neutral monomer is comprised in the reaction mixture in 5 to 25 % by weight, preferably 10 to 20 % by weight and more preferably 10 to 17 % by weight, based on the total amount of monomers in said composition. If the neutral monomer is comprised in said content the amphiphilicity of the resulting copolymer is best suited for various applications such as an application in leather wet end processing.

Further, the neutral monomer may be water insoluble but is dispersible in water in order to be available for copolymerization. In this context, "water soluble" means soluble in water at room temperature (20 °C) in at least 5 % by weight based on the total weight of the aqueous solution.

Redox system of a hydroperoxide and a hydroxylammonium salt

Further to the acidic and neutral monomer, the polymerization mixture contains a redox system of a hydroperoxide and a hydroxylammonium salt. Said hydroperoxide and hydroxylammonium salt function as polymerization initiator for a radical polymerization. In this context, the hydroxylammonium salt is known to catalyze the decomposition of the hydroperoxide ROOH to form a hydroxyl radical which is able to initiate radical polymerization.

The hydroperoxide of the redox system is preferably selected from hydrogen peroxide and tert-butyl hydroperoxide. In view of availability, cost, and water solubility, it is more preferably hydrogen peroxide.

The hydroxylammonium salt of the redox system is preferably selected from hydroxylamine sulfate (HAS), hydroxylamine nitrate (HAN), hydroxylamine chloride (HAC), and hydroxylamine bromide (HAB). More preferably, the hydroxylammonium salt is hydroxylamine sulfate due to its availability and high reactivity.

In the redox system the hydroperoxide is preferably provided in an amount of 2 to 5 % by weight, more preferably 2.5 to 4.5 % by weight, and even more preferably 3 to 4 % by weight, based on the total weight of the monomers employed in the composition. Moreover, the hydroxylammonium salt is preferably provided in an amount of 1 to 5 % by weight, more preferably 1.5 to 4.5 % by weight, and even more preferably 2 to 4 % by weight, based on the total weight of the monomers employed in the composition. Applying said amounts results in optimal initiation of the polymerization and excellently suited molecular weight of the resulting polymer.

Polymerization reaction medium

The polymerization reaction is conducted in only water as polymerization reaction medium according to the present invention. Since no further solvents are included in the reaction medium, no other solvents have to be removed after polymerization from the dispersion for the resulting dispersing agent to be used in various applications, such as leather wet end applications.

Moreover, it is important that the reaction medium does not contain a surfactant in order to provide a surfactant free dispersing agent. Since no surfactant is included in the reaction medium, the polymerization occurs in homogeneous solution instead of at an interface of a nanophase-separated dispersion caused by a surfactant. Thus, using no surfactant results in increased reactivity of hydrophilic monomers such as the acidic monomers to form a copolymer having a high ratio of hydrophilic monomers.

Process parameters

The polymerization process is conducted at atmospheric pressure and at a temperature in the range of 80 °C to 100 °C. Employing the above parameters results in low cost and energy demand of the polymerization reaction. Moreover, the decomposition of the hydroperoxide catalyzed by the hydroxylammonium salt occurs at such temperatures at a high reaction rate. Since only water is used as a solvent, working at or below 100 °C prevents strong boiling and evaporation of the solvent. Thus, it is not necessary to apply high pressure to keep additional solvents in a liquid state at such temperature. Preferably, the polymerization reaction is carried out at a temperature of from 80 °C to 95 °C and more preferably at 82 °C to 90 °C.

Further, the polymerization reaction is preferably conducted for a duration of 30 minutes to 10 hours, more preferably for 1 hour to 5 hours, and even more preferably for 1.5 hours to 3 hours. By reacting the monomers for the above duration, the monomers and initiators react nearly completely and the molecular weight of the resulting copolymer can be adjusted to the values described below.

Neutralization step

Subsequently, after the polymerization process, the resulting reaction mixture is neutralized by means of an alkali. Preferably, the alkali is selected from the group consisting of sodium hydroxide (NaOH), potassium hydroxide (KOH), lithium hydroxide (LiOH), and ammonia ($NH_3$). Using one of said alkalis results in a small volume of alkali being required to neutralize the acidic reaction mixture. More preferably, the alkali is sodium hydroxide.

In this step, the reaction mixture is preferably brought to a slightly acidic pH value below 7. For instance, the pH of the resulting mixture might be 4 to 6.5 or even 4.5 to 5.5. Ensuring such pH value results in excellent amphiphilicity of the produced copolymer, since a specific part of the acidic functionalities is maintained protonated.

Dispersing agent

Moreover, the present invention is related to a surfactant free, low molecular weight, copolymeric dispersing agent which is obtainable by the process described above. In this context, the dispersing agent is a copolymer of a hydrophilic (acidic) and a hydrophobic (neutral) monomer. Thus, the resulting dispersing agent is amphiphilic in order to being able to disperse hydrophobic components in a hydrophilic environment. In the following, the term "copolymer" and "dispersing agent" are used interchangeably. In this context, the copolymer has no specific sequence of both types of monomers, i.e., it is a random copolymer.

Said surfactant free, low molecular weight, copolymeric dispersing agent according to the present invention has a K value molecular weight in the range of 10 to 100. Preferably, the K value molecular weight is in the range of 20 to 60 and, more preferably, in the range of 25 to 40.

In this context, the molecular weight of polyacrylic acid type polymers is proportional to viscosity. For this reason, the Fikentscher K value may be used to determine the intrinsic viscosity of the above copolymer. The intrinsic viscosity is used to characterize the degree of polymerization. Moreover, a low viscosity is connected to a low K value. Thus, the K value is a measure for viscosity and the proportional molecular weight, i.e., a high K value is correlated to a high molecular weight. If the K value is within the above ranges, the molecular weight of the copolymer in combination with the amphiphilicity described via the ratio of monomers above is optimal to both being able to be dissolved in water and to disperse other hydrophobic components without the use of surfactants.

The "K value" as used herein is a numerical value obtained by measuring the relative viscosity (RV) of a 1 % by weight aqueous solution of the copolymer produced in the process described above at 25 °C with a capillary viscometer, via the method described below.

In the following, the method for determining the K value will be described in detail. Said method is applied to a copolymer obtained by the above process.

K value analysis method

A 1 % by weight polymer solution in distilled water at 25 °C is prepared. The solution is stirred for 4 hours in a beaker with a magnetic stirrer. For K value determination, the obtained solution has to be visibly clear, that is without containing visible particles. For K value analysis, firstly, distilled water is added to a capillary viscosity tube (SI Analytics/Cannon Fenske Capillary Tube, Type 513 10, Capillary no: 100) and the filled capillary viscosity tube is conditioned for 5 minutes in a water bath at 25 °C. Then, the flow duration of the distilled water in the capillary tube is measured twice and averaged ($t_{solvent}$). For instance, the $t_{solvent}$ value for distilled water is measured to be 65 s. Subsequently, a 1 % by weight polymer solution is added to the same capillary tube after cleaning and is also conditioned for 5 minutes in the same water bath at 25 °C. Then, the flow duration is measured for the polymer solution twice and averaged ($t_{polymer}$). From both $t_{polymer}$ and $t_{solvent}$ the relative viscosity (RV) value is calculated with the below formula:

$$RV = \frac{t_{polymer}}{t_{solvent}}$$

Subsequently, the K value is calculated according to BS EN ISO 1628-1 by substituting the relative viscosity (RV) value in the following Fikentscher's viscosity formula (Fikentscher's method):

$$K = 1000 \times \frac{1{,}5 \, \log RV - 1 \mp \sqrt{1 + (\frac{2}{C} + 2 + 1{,}5 \log RV) \times 1{,}5 \log RV}}{150 + 300 \, C}$$

wherein RV is the relative viscosity and C is the concentration of the aqueous solution (g/100 mL).

Thus, the herein described copolymer may have a relative viscosity of, e.g., 0.1 to 400 cps. If said condition is met, the copolymer exhibits excellent handling properties and is capable of dispersing hydrophobic components in further applications.

Moreover, the dispersing agent preferably has a solid content of 10 to 40 % by weight, more preferably of 15 to 30 % by weight, and even more preferably of 20 to 25 % by weight. Ensuring said solid content results in the dispersing agent being easy to handle and distribute and excellent dissolving and dispersing properties in water without the use of surfactants.

Use of the dispersing agent

Further, the present invention is related to the use of the above-described surfactant free, low molecular weight, copolymeric dispersing agent for leather wet end applications. Other uses include the application of such dispersing agent in coating and textile industry.

Examples

The present invention is further described in the following with reference to examples.

Examples 1 to 5 and the respective composition being used for polymerization are shown in Table 1. In each example, a mixture of monomers is prepared by mixing 163 g of acrylic acid and 18 g of butylacrylate. The monomer mixture and catalysts as shown in Table 1 are fed into a 2 kg round bottomed reactor flask with an agitator, that is, the catalysts HAS and $H_2O_2$ are added in terms of aqueous solutions maintaining constant agitation by a peristaltic pump. The reactor flask was equipped with a reflux condenser, a thermocouple, and a metallic stirrer. The reaction temperature was maintained at 88 °C and all reactions are conducted in water. Reaction duration is set to 2 h.

After the reaction has been completed, the polymer dispersion is neutralized with caustic soda (50% aqueous solution) until the pH value reaches approximately 5.0. Subsequently, the molecular weight of the resulting copolymer is tested by the above-described method for determining the Fikentscher K value.

Table 1: Examples 1 to 5 including amounts of HAS and $H_2O_2$ in % of the total monomers and the K value of the resulting copolymer.

| Example | HAS | $H_2O_2$ | K value |
|---|---|---|---|
| 1 | 1.5 | 3.5 | 55.8 |
| 2 | 1.5 | 2.5 | 55.6 |
| 3 | 1.5 | 5.0 | 70.0 |
| 4 | 3.0 | 2.5 | 37.9 |
| 5 | 3.0 | 3.5 | 36.0 |

**Claims**

1. Process for producing a surfactant free, low molecular weight copolymer, comprising the steps of:

    polymerizing a composition comprising

        (i) at least one ethylenically unsaturated monomer having acidic functionality and being present in an amount of 95 - 75 % by weight, based on the total amount of monomers in said composition, and
        (ii) at least one ethylenically unsaturated monomer having no acidic functionality and being present in an amount of 5 - 25 % by weight, based on the total amount of monomers in said composition,

    in only water as polymerization reaction medium
    in the presence of a redox system of a hydroperoxide and a hydroxylammonium salt as polymerization initiator
    at atmospheric pressure and
    at a temperature in the range of 80 °C to 100 °C
    without use of a surfactant,
    and subsequently, after polymerization, neutralizing the reaction mixture by means of an alkali,
    thereby obtaining a surfactant free copolymer with a K value molecular weight in the range of 10 to 100, preferably 20 to 60, more preferably, 25 to 40.

2. The process according to claim 1, wherein the ethylenically unsaturated monomer having acidic functionality is selected from acrylic acid (AA), itaconic acid (IA), methacrylic acid (MAA), 2-acrylamido-2-methylpropane sulfonic acid (AMPS), or sodium vinylsulfonate (SVS), and the ethylenically unsaturated monomer having no acidic functionality is selected from butyl acrylate (BA), methyl methacrylate (MMA), ethyl acrylate (EA), 2-ethylhexyl acrylate or vinyl acetate (VAM).

3. The process according to claim 1 or 2, wherein the ethylenically unsaturated monomer having acidic functionality is acrylic acid (AA).

4. The process according to any one of claims 1 to 3, wherein the ethylenically unsaturated monomer having no acidic functionality is butyl acrylate (BA).

5. The process according to any one of claims 1 to 4, wherein the hydroperoxide of the redox system is selected from hydrogen peroxide or tert-butyl hydroperoxide, preferably from hydrogen peroxide.

6. The process according to any one of claims 1 to 5, wherein the hydroxylammonium salt of the redox system is hydroxylamine sulfate (HAS).

7. The process according to any one of claims 1 to 6, wherein the polymerization reaction is carried out at a temperature of from 80 °C to 95 °C.

8. The process according to any one of claims 1 to 7, wherein the redox system is provided in an amount of 2 to 5 % by weight in terms of the hydroperoxide and 1 to 5 % by weight in terms of the hydroxylammonium salt, respectively, each based on the total weight of the monomers employed in the composition.

9. The process according to any one of claims 1 to 8, wherein the alkali is sodium hydroxide.

10. Surfactant free, low molecular weight, copolymeric dispersing agent obtainable by the process according to any one of claims 1 to 9, said surfactant free, low molecular weight, copolymeric dispersing agent having a K value molecular weight in the range of 10 to 100.

11. Use of the surfactant free, low molecular weight, copolymeric dispersing agent according to claim 10 for leather wet end applications.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 897 215 A (TRIESELT WOLFGANG [DE] ET AL) 30 January 1990 (1990-01-30)<br>* column 1, line 60 - column 2, line 26; example 2 *<br>* column 7, lines 5-7 * | 1-10 | INV.<br>C08F220/06<br>C08F2/16<br>C08F4/40<br>C08F8/44 |
| Y,D | WO 95/33780 A1 (HENKEL KGAA [DE]; JEROMIN LUTZ [DE] ET AL.) 14 December 1995 (1995-12-14)<br>* page 4, paragraph 1 * | 1-10 | |
| A | GB 831 832 A (BASF AG) 6 April 1960 (1960-04-06)<br>* column 1, line 26 - column 2, line 80; example 1 * | 1-11 | |
| | | | **TECHNICAL FIELDS SEARCHED (IPC)**<br><br>C08F |

The present search report has been drawn up for all claims

| Place of search | Date of completion of the search | Examiner |
|---|---|---|
| The Hague | 25 October 2023 | Plehiers, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 455 172 A1

## ANNEX TO THE EUROPEAN SEARCH REPORT
## ON EUROPEAN PATENT APPLICATION NO.

EP 23 17 0051

25-10-2023

| Patent document cited in search report | | Publication date | Patent family member(s) | | Publication date |
|---|---|---|---|---|---|
| US 4897215 | A | 30-01-1990 | AT | E58395 T1 | 15-11-1990 |
| | | | AU | 601579 B2 | 13-09-1990 |
| | | | CA | 1307436 C | 15-09-1992 |
| | | | DE | 3716544 A1 | 24-11-1988 |
| | | | EP | 0292766 A1 | 30-11-1988 |
| | | | ES | 2018864 B3 | 16-05-1991 |
| | | | JP | S63305200 A | 13-12-1988 |
| | | | US | 4897215 A | 30-01-1990 |
| WO 9533780 | A1 | 14-12-1995 | DE | 4419568 A1 | 07-12-1995 |
| | | | EP | 0763066 A1 | 19-03-1997 |
| | | | WO | 9533780 A1 | 14-12-1995 |
| GB 831832 | A | 06-04-1960 | BE | 559010 A | 25-10-2023 |
| | | | DE | 1037129 B | 21-08-1958 |
| | | | FR | 1178233 A | 05-05-1959 |
| | | | GB | 831832 A | 06-04-1960 |
| | | | NL | 99372 C | 25-10-2023 |
| | | | NL | 218685 A | 25-10-2023 |

EPO FORM P0459

**REFERENCES CITED IN THE DESCRIPTION**

**Patent documents cited in the description**

- WO 9418249 A1
- WO 9533780 A1